# EUROPÄISCHE PATENTSCHRIFT

(11) **EP 1 139 059 B1**
(45) Veröffentlichungstag und Bekanntmachung des Hinweises auf die Patenterteilung: **12.07.2006**
(21) Anmeldenummer: 01107005.9
(22) Anmeldetag: 21.03.2001
(51) Int. Cl.: B60R 21/26, B60R 22/46

(54) **Zündvorrichtung für ein Sicherheitssystem**
Ignition device for a safety system
Dispositif d'allumage d'un système de sécurité

(30) Priorität: 28.03.2000 DE 10015085; 09.03.2001 DE 10111809
(43) Veröffentlichungstag der Anmeldung: 04.10.2001
(73) Patentinhaber: Hirschmann Automotive GmbH, 6830 Rankweil-Brederis (AT)
(72) Erfinder: Schmid, Günther, 6840 Götzis (AT); Schmid, Martin, 6820 Frastanz (AT)
(74) Vertreter: Thul, Hermann

(56) Entgegenhaltungen:
- EP-A- 0 802 092
- DE-A- 19 609 908
- GB-A- 404 335
- US-A- 4 422 381
- US-A- 5 454 320

## Beschreibung

Die Erfindung betrifft eine Zündvorrichtung für ein Sicherheitssystem, bei dem es sich insbesondere um einen Airbag oder einen Gurtstraffer eines Fahrzeuges handelt, gemäß den Merkmalen des Oberbegriffes des Patentanspruches 1.

Aus der AT 000 522 U1 ist schon eine Antriebsvorrichtung für Rückhaltesysteme in Kraftfahrzeugen bekannt. Diese besteht aus einem Gehäuse mit einem Zylinder, in dem ein Kolben bewegbar angeordnet ist. Der Kolben wird aus dem Zylinder herausgedrückt, wenn eine Arbeitskammer des Gehäuses druckbeaufschlagt durch Zünden einer Treibladung gefüllt worden ist. Die Treibladung ist in einem Teilbereich des Gehäuses angeordnet und wird durch einen sogenannten Berstboden von der Arbeitskammer getrennt. Innerhalb der Treibladung ist eine Zündladung vorhanden, die, wenn die Zündladung gezündet wurde, die Treibladung zur Explosion bringt.

Die Treibladung, in der die Zündladung steckt, ist in einem Teilbereich des Gehäuses untergebracht und wird von einer Distanzhülse von diesem Teilbereich des Gehäuses getrennt. Die Zündladung ist durch sehr dünne Zuleitungen mit einer Steuervorrichtung verbunden. Der Teilbereich des Gehäuses, in dem die Treibladung angeordnet ist, ist von einer Kappe verschlossen.

Eine solche Anordnung hat den Nachteil eines sehr komplizierten Aufbaus. Darüber hinaus ist die Montage der gesamten Zündvorrichtung äußerst aufwendig, da von Hand viele einzelne Montageschritte durchgeführt werden müssen. Diese Verfahrensschritte sind aufgrund der nicht definierbaren Lage der Zuleitungen und der Position der Zündladung in der Treibladung nicht oder nur mit sehr hohem, also nicht mehr vertretbaren Aufwand automatisierbar. Außerdem kann die Prüfung der Zündverrichtung nur mit der gesamten Antriebsvorrichtung des Rückhaltesystemes ausgeführt werden, wodurch sich auch bei diesem Verfahrensschritt der Aufwand erhöht.

Bei der AT 000 522 U1 sind schon Maßnahmen ergriffen worden, um Fehlzündungen zu vermeiden. Ein weiterer Nachteil dieser Antriebsvorrichtung für Rückhaltesysteme besteht jedoch darin, daß trotz Verwendung einer Kappe die Treibladung und die Zündladung einschließlich der elektrischen Zuleitungen nicht vollständig vor Umgebungseinflüssen, insbesondere Feuchtigkeit, geschützt werden können. Dringt nämlich Feuchtigkeit in die Treibladung ein, ist die Funktion nicht mehr gewährleistet. Dies ist bei Sicherheitssystemen nicht hinnehmbar.

Die DE 196 09 908 A betrifft eine Zündvorrichtung für ein Sicherheitssystem, insbesondere einen Airbag oder einen Gurtstraffer eines Fahrzeuges, mit einem über Anschlussmittel, insbesondere Anschlussleitungen, zündbarem Zündelement, wobei das Zündelement mit den Anschlussmitteln in einem Zündgehäuse angeordnet und vormontiert ist, wobei das Zündelement Kontaktfahnen aufweist, wobei zumindest eine der Kontaktfahnen des Zündelementes über elektrisch leitende Verbindungsmittel mit einem der Anschlussmittel, insbesondere einem Ende der Anschlussleitung, verbunden ist.

Der Erfindung liegt daher die Aufgabe zugrunde, die eingangs geschilderten Nachteile zu vermeiden.

Diese Aufgabe ist durch die Merkmale des Patenanspruches 1 gelöst.

Erfindungsgemäß ist vorgesehen, dass die elektrisch leitenden Verbindungsmittel als Stanzteile ausgebildet sind. Im Zusammenhang damit ist vorgesehen, daß das Zündelement mit den Anschlußmitteln, insbesondere den Anschlußleitungen, in einem eigenen Zündgehäuse angeordnet und vormontiert ist. D. h. es steht eine vormontierte Einheit zur Verfügung, die vor ihrem Einbau schon auf ihre Funktionstüchtigkeit hin überprüft werden kann. Außerdem ist es möglich, diese Zündvorrichtung unabhängig von dem verwendeten Sicherheitssystem und dem Einbauort des Sicherheitssystems vorzumontieren, so daß dadurch hinsichtlich der Produktion eine höhere Flexibilität gegeben ist, da der Hersteller der Zündvorrichtung nicht unbedingt der Hersteller des Sicherheitssystemes sein muß. Ist die Zündvorrichtung auf ihre Funktion hin überprüft worden, kann diese ohne weitere Prüfung in die Treibladung in dem Sicherheitssystem eingebaut werden. Bei dem Zündelement handelt es sich allgemein um ein

Auslöseelement für elektrisch betätigte Sicherheitseinrichtungen auf Pyrotechnikbasis, wobei es sich bei den Sicherheitseinrichtungen insbesondere um Airbags oder Gurtstraffer von Fahrzeugen handelt. Als Zündelement können sowohl getauchte Zündköpfen als auch Anzünder in Glas/Metall-Ausführung oder dergleichen verwendet werden.

Im Zusammenhang mit der Erfindung weist das Zündelement Kontaktfahnen auf. Mittels dieser Kontaktfahnen ist es möglich, die Enden der Anschlußleitungen direkt an diesen Kontaktfahnen zu befestigen, insbesondere durch Löten oder Schweißen. Gegebenenfalls kann auch eine mechanische Verbindung, insbesondere Crimpen, zum Einsatz kommen.

In erfinderischer Ausgestaltung der Erfindung ist zumindest eine der Kontaktfahnen des Zündelementes über elektrisch leitende Verbindungsmittel, nämlich Stanzteile, mit einem der Anschlußmittel, insbesondere einem Ende einer Anschlußleitung, verbunden. Dadurch kann der Bereich zwischen dem Einbauort des Zündelementes in dem Zündgehäuse und dem Einbauort der Enden der Anschlußmittel in dem Zündgehäuse überbrückt werden, falls dies erforderlich ist. Durch die Verwendung von Stanzteilen als elektrisch leitende Verbindungsmittel ist es möglich, den Zusammenbauvorgang sowie die anschließend Kontaktierung zu automatisieren, da die Stanzteile starr sind und damit eine genaue Positionierung zu den anderen Bauteilen wie Zündelement und Anschlußleitungen gegeben ist. Außerdem ist es möglich, das elektrisch leitende Verbindungsmittel, also ein Stanzteil, durch ein elektronisches Bauelement zu ersetzen. In besonders vorteilhafter Weise handelt es sich hierbei um eine Spule oder Drossel, mittels der Fehlzündungen in Folge von durch eingestrahlte elektromagnetische Felder entstehenden Spannungen bzw. Strömen oder leitungsgebundenen HF-Wellen abgeleitet werden können. An Stelle von Drosseln oder Spulen können auch Bauteile wie Kondensatoren, Varistoren oder dergleichen eingesetzt werden. Hierbei handelt es sich aufgrund der Kompaktheit insbesondere um SMD-Bauteile. Die Bauteile können auch alternativ oder ergänzend parallel zu den Verbindungsmitteln gestaltet sein.

Der Einsatz von Stanzteilen als elektrisch leitende Verbindungsmittel hat also den Vorteil, daß die Stanzteile automatisiert zugeführt und weiterverarbeitet werden können und gleichzeitig die elektrische Kontaktierung zwischen den beteiligten Bauelementen hergestellt wird.

In Weiterbildung der Erfindung ist zumindest ein Verbindungsmittel, insbesondere eines der Stanzteile, als Elektrode ausgebildet. Das als Elektrode ausgebildete Stanzteil oder mehrere Stanzteile werden aus dem Zündgehäuse herausgeführt und bilden mit dem Gehäuse des Sicherheitssystems eine Funkenstrecke, über welche Spannungen abgeleitet werden können, die ansonsten im Falle der Nichtableitung zu einem Auslösen des Zündelementes führen würden. Somit ist durch die Verwendung eines Stanzteiles als Elektrode die Kompaktheit weiter erhöht bei gleichzeitiger Erhöhung der Funktionalität.

In Weiterbildung der Erfindung sind zumindest das Zündelement, die Verbindungsmittel (Stanzteile) sowie die Enden der Anschlußmittel in einem offenen Gehäuse, insbesondere einer Halbschale, angeordnet. In diesem offenen Gehäuse, welches ebenfalls automatisiert zugeführt werden kann, sind insbesondere durch eine Profilierung der Innenkontur die Positionen des Zündelementes, der Verbindungsmittel sowie der Enden der Anschlußmittel vorgegeben, so daß nach dem Einsetzen der Bauelemente in das offene Gehäuse die Lage der beteiligten Bauelemente vorgegeben ist und die Kontaktierung automatisiert erfolgen kann.

In Weiterbildung der Erfindung sind zumindest die Verbindungsmittel, insbesondere die Stanzteile, in einem umspritzten Gehäuse angeordnet. Die Stanzteile werden lagefixiert und anschließend das Gehäuse in einem Kunststoffspritzverfahren oder in einem anderen geeigneten Verfahren hergestellt, so daß nach dem Umspritzen eine vormontierte Baueinheit entsteht. Diese Baueinheit kann automatisiert dem nächsten Verfahrensschritt zugeführt und dort weiterbearbeitet werden. Insbesondere erfolgt in dem nächsten Verfahrensschritt das Einsetzen und Kontaktieren von elektronischen Bauteilen mit den Stanzteilen. Auch bei dem umspritzten Gehäuse handelt es sich um ein offenes Gehäuse, damit die Stanzteile zum Einsetzen und Kontaktieren der Bauelemente zugänglich sind.

Nach dem Einsetzen der beteiligten Bauelemente und der Kontaktierung muß das offene Gehäuse verschlossen werden. Hier bietet es sich erfindungsgemäß an, das offene Gehäuse mit einer Vergußmasse zu verschließen. Dies hat den Vorteil, daß dieser Vorgang ebenfalls automatisiert ausgeführt werden kann und zu einer zuverlässigen elektrischen Isolation der beteiligten Bauteile gegeneinander führt. Außerdem bewirkt die Vergußmasse einen sehr guten Schutz der elektrischen Bauelemente vor Umwelteinflüssen, so daß Fehlfunktionen bzw. ein Ausfall gerade in Folge von Feuchtigkeit ausgeschlossen werden kann. Außerdem können keine Kurzschlüsse entstehen, da in das Gehäuse keine elektrisch leitenden Partikel eindringen können und auch innerhalb des Gehäuses keine Bauteile in Folge von Vibrationen Berührung finden. So sind also die im Inneren des Gehäuses befindlichen Bauelemente elektrisch voneinander isoliert. Außerdem wird durch die Verwendung eines offenen Gehäuses und dem anschließenden Vergießen die Steifigkeit der gesamten Anordnung deutlich erhöht. Ein weiterer Vorteil besteht darin, daß das mit der Vergußmasse verschlossene, vorher offene Gehäuse problemlos automatisiert weiterverarbeitet werden kann.

Alternativ dazu ist es möglich, daß das offene Gehäuse mit einem entsprechenden Deckel verschlossen wird. Weist der Deckel als Innenkonturen die Außenkonturen des offenen Gehäuses einschließlich der beteiligten Bauelemente auf, kann ein Ausgießen entbehrlich sein. Ist dies nicht der Fall, d. h., es gibt noch Zwischenräume zwischen der Innenkontur des Deckels und der Außenkontur des offenen Gehäuses mit seinen beteiligten Bauelementen, bietet sich das Ausgießen mit einer Vergußmasse an. Auch hierdurch ergeben sich die gleichen Vorteile wie bei dem Vergießen des offenen Gehäuses mit einer Vergußmasse.

Bei beiden Alternativen ist noch der Vorteil zu nennen, daß durch Verwendung von GehäuseNergußmasse oder Gehäuse/Deckel (ggfs. mit Vergußmasse) die Enden der Anschlußmittel mechanisch festgesetzt werden. Dadurch ist eine bessere Zugentlastung gegeben. Außerdem ist eine erhöhte Längswasserdichtigkeit gegeben. Weil die Vergußmasse auch die Kontaktfahnen und Teile des Zündelementes umschließt, erhöht sich die Dichtigkeit.

Nachdem das Gehäuse verschlossen worden ist, wird es von dem Zündgehäuse umgeben. Dabei kann das Zündgehäuse beispielsweise aus zumindest zwei Gehäusehälften bestehen, in welche das verschlossene Gehäuse mit dem Zündelement und den Anschlußleitungen eingesetzt wird. Alternativ dazu ist es möglich, daß das verschlossene Gehäuse mit dem Zündelement und seinen Anschlußleitungen und der Elektrode umspritzt wird, wobei sich aus der Umspritzung das Zündgehäuse ergibt. Wird das Zündgehäuse durch Umspritzen hergestellt, wirkt sich der steife Grundaufbau wieder vorteilhaft aus, da durch das Umspritzen weder das Zündelement noch die beteiligten Bauelemente (Stanzteile etc.) beschädigt noch in ihrer Funktion beeinträchtigt werden können. Durch den Grundaufbau des verschlossenen, vormals offenen Gehäuses ist es auch möglich, diesen Grundaufbau automatisiert in das Spritzwerkzeug einzulegen. Das Umgeben des verschlossenen Gehäuses mit dem Zündgehäuse verleiht dem gesamten Aufbau darüber hinaus eine zusätzliche Dichtigkeit. Die äußeren Konturen des Zündgehäuses sind dabei so gestaltet, daß ein automatisiertes Weiterverarbeiten wie das Prüfen und der Einbau in das Sicherheitssystem möglich ist.

Eine erfindungsgemäße Zündvorrichtung und verschiedene Verfahrensschritte zu ihrer Herstellung sind anhand eines Ausführungsbeispieles im folgenden beschrieben und anhand der Figuren erläutert, wobei die Erfindung jedoch nicht auf dieses Ausführungsbeispiel beschränkt ist.

Es zeigen:
- Figur 1:: eine fertige Zündvorrichtung,
- Figuren 2 bis 5:: verschiedene Verfahrensschritte zur Herstellung der Zündvorrichtung.
- Figuren 6 bis 8:: alternative Verfahrensschritte zur Herstellung der Zündvorrichtung.

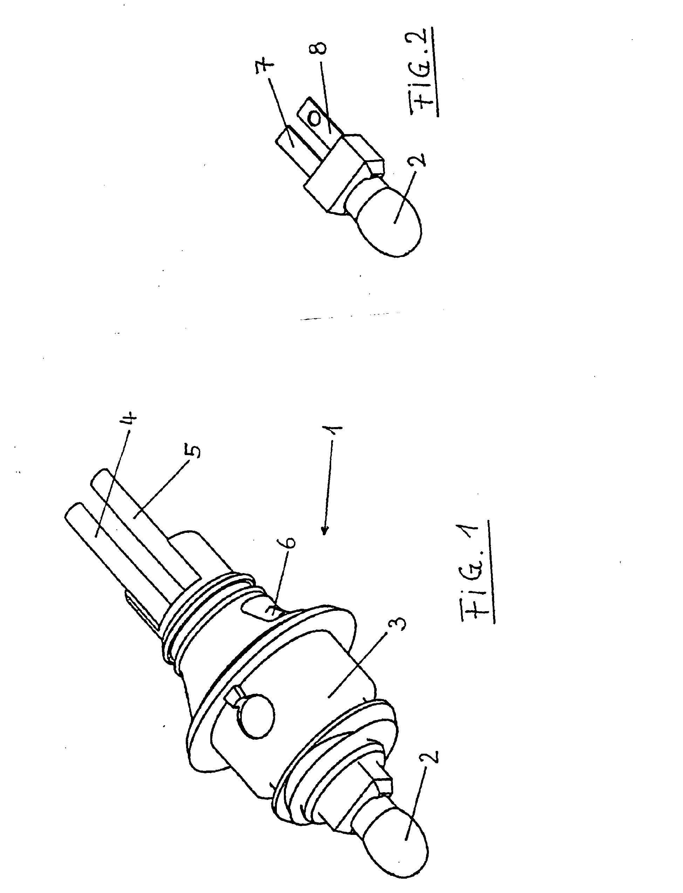

Figur 1 zeigt eine Zündvorrichtung 1, die als vormontierte Einheit herstellbar und prüfbar ist. Diese Zündvorrichtung 1 wird als vormontierte Einheit an entsprechender Stelle des Sicherheitssystems des Airbags oder des Gurtstraffers oder dergleichen in dem Fahrzeug eingebaut.

Die Zündvorrichtung 1 umfaßt ein Zündelement 2, welches mit einem elektrischen Impuls beaufschlagt werden kann, um eine Treibladung (hier nicht gezeigt) des Sicherheitssystems zur Explosion zu bringen. Auf die Anordnung und Wirkung der Treibladung kommt es bei dieser Erfindung nicht an, so daß sich hierzu eine Beschreibung erübrigt.

Das Zündelement 2 sitzt an einer Stirnseite eines Zündgehäuses 3, mit dem die Zündvorrichtung 1 in ein ebenfalls nicht gezeigtes Gehäuse des Sicherheitssystems eingebaut werden kann. Anschlußleitungen 4 und 5, über die das Zündelement 2 seinen Impuls erhält, sind an der gegenüberliegenden Stirnseite des Zündgehäuses 3 aus diesem herausgeführt, können aber auch an beliebiger anderer Stelle aus diesem Zündgehäuse 3 herausgeführt werden. In Figur 1 ist noch gezeigt, daß aus dem Zündgehäuse 3 eine Elektrode 6 (oder mehrere) hinausragen, die nach dem Einbau in das Gehäuse des Sicherheitssystems einen gewissen Abstand von dem Gehäuse haben, so daß zwischen der Elektrode 6 und dem Gehäuse eine Funkenstrecke gebildet wird, innerhalb der ein Funkenüberschlag stattfinden kann, wenn in Folge von statischen Aufladungen Spannungen zwischen dem Gehäuse und den Anschlußleitungen 4 und 5 auftreten. Diese Ableitung der statischen Aufladung hat den Vorteil, daß dadurch die ungewollte Zündung des Zündelementes 2 vermieden wird.

Die Außenkonturen des Zündgehäuses 3 sind dabei so gewählt, daß sie ein maschinelles Handling der Zündvorrichtung 1 gestatten, so daß die Zündvorrichtung 1 problemlos in das Gehäuse des Sicherheitssystemes eingesetzt und festgesetzt werden kann und auch noch einen Knickschutz für die Anschlußleitungen 4 und 5 bietet.

Figur 2 zeigt die Ausgestaltung des Zündelementes 2, das aus einem Kopf mit der Zündladung und Kontaktfahnen 7 und 8 für die elektrische Kontaktierung besteht. Ein solches Zündelement 2 kann vorgefertigt werden und aufgrund der steifen Kontaktfahnen 7 und 8 problemlos automatisiert dem nächsten Arbeitsschritt zugeführt werden.

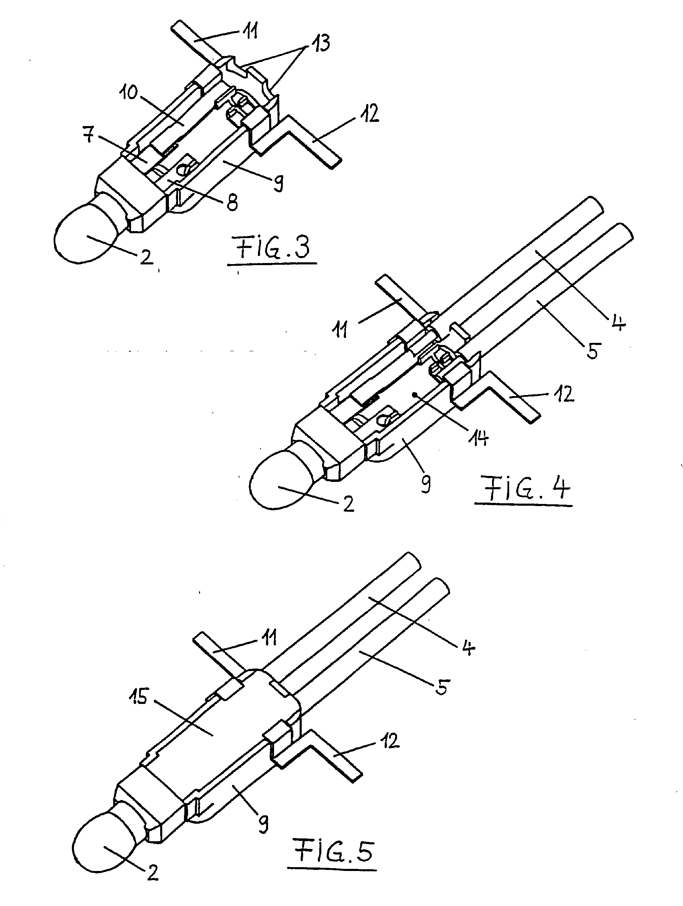

Figur 3 zeigt als nächsten Arbeitsschritt das Einsetzen des Zündelementes 2 in ein offenes Gehäuse, das als Halbschale 9 ausgebildet ist. In die Halbschale 9 werden anschließend Stanzteile 10 bis 12 eingesetzt, die zum einen die Kontaktierung zwischen den Kontaktfahnen 7 und 8 und den Enden der Anschlußleitungen 4 und 5 übernehmen und weiterhin die Elektroden bilden. Dabei bilden die nach außen abstehenden Stanzteile 11 und 12 die späteren Elektroden 6, die aus dem Zündgehäuse 3 hinausragen. In Figur 3 ist gezeigt, daß an der Kontaktfahne 7 das Stanzteil 10 als Verbindungsmittel und das Stanzteil 11 als spätere Elektrode 6 kontaktiert wird. An der Kontaktfahne 8 ist noch nichts angeschlossen, während das Stanzteil 12 aufgrund seiner geometrischen Form (genauso wie das Stanzteil 11) an der Halbschale 9 festgeklemmt ist. Alternativ dazu kann auch erst vor dem Einlegen der Stanzteile ein elektronisches Bauteil (wie eine Drossel) eingesetzt werden.

Durch diese Ausbildung werden die Stanzteile und die anderen beteiligten Bauelemente (insbesondere das Stanzteil 10 und damit auch das Zündelement 2) in der Halbschale 9 wirksam festgelegt, so daß sie danach kontaktiert werden können. Die Halbschale 9 weist zusätzlich zur Aufnahme der Enden der Anschlußleitungen 4 und 5 jeweils eine Ausnahme 13 auf.

Figur 4 zeigt den nächsten Verarbeitungsschritt, wobei sichtbar ist, daß die Enden der Anschlußleitungen 4 und 5 in die Ausnahmen 13 so eingebettet wurden, daß die elektrisch leitenden Enden der Anschlußleitungen 4 und 5 mit den entsprechen ausgestalteten Gegenteilen der Stanzteile 11 und 12 kontaktiert werden können. Vor dem Kontaktieren der Anschlußleitung 5 wird noch eine Stabkerndrossel 14 zwischen der Kontaktfahne 8 des Zündelementes 2 und dem Stanzteil 12 eingesetzt und ebenfalls mitkontaktiert. Es kann auch erst die Stabkerndrossel 14 (und/oder andere Bauelemente) und danach die Stanzteile eingesetzt werden; anschließend erfolgt die Kontaktierung.

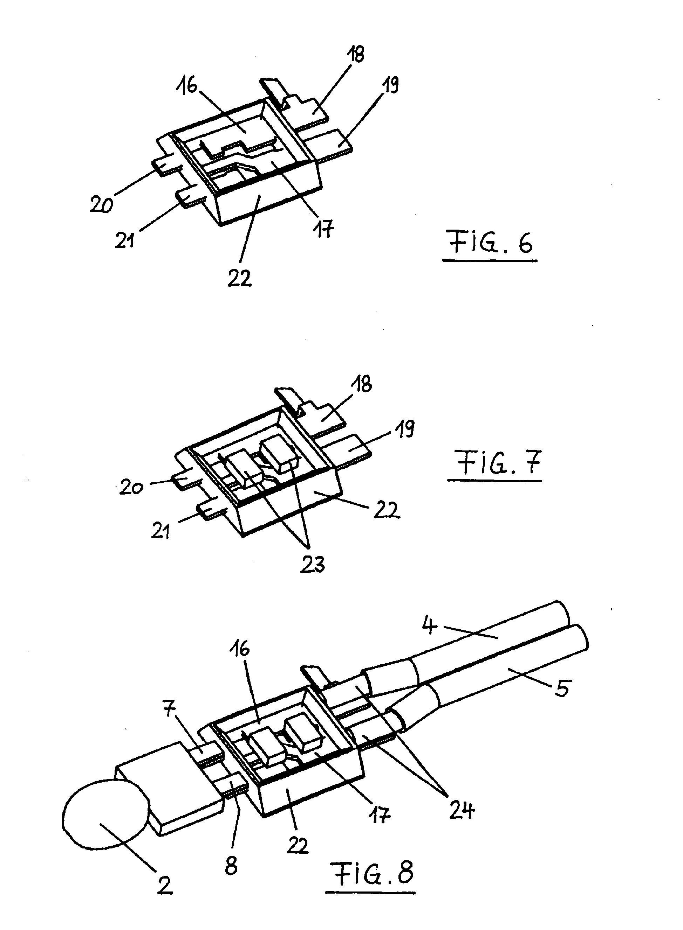

Figur 5 zeigt, daß die gemäß Figur 4 automatisiert hergestellte Anordnung mit einer Vergußmasse 15 versehen wird. Diese Vergußmasse 15 kann ebenfalls automatisiert in die offenen Halbschale 9 eingespritzt werden und erhöht die Festigkeit und gibt Schutz vor Umwelteinflüssen, wobei die Längswasserdichtigkeit entlang der Anschlußleitungen 4 und 5 in Richtung des Zündelementes 2 besonders hervorzuheben ist. Diese Längswasserdichtigkeit ist dadurch gegeben, daß ein Teil der Ummantelung der Anschlußleitungen 4 und 5, der sich in den Ausnahmen 13 befindet, von der Vergußmasse 15 mit umschlossen wird.

Die in Figur 5 gezeigte Anordnung kann ebenfalls automatisiert dem nächsten Verarbeitungsschritt zugeführt werden, wobei diese Anordnung von dem Zündgehäuse 3 umspritzt wird oder in ein entsprechend ausgestaltetes Zündgehäuse 3 eingesetzt wird. Auch hierbei ist es wieder denkbar, daß das Zündgehäuse 3 aus zwei oder mehreren Teilen besteht, die die Anordnung nach Figur 5 aufnehmen und anschließend mit einer weiteren Vergußmasse zusammengefügt werden.

Somit entsteht eine Zündvorrichtung wie sie in Figur 1 gezeigt ist.

In den Figuren 6 bis 8 sind analog zu den Verfahrensschritten, die in den Figuren 3 bis 5 gezeigt und beschrieben sind, alternative Verfahrensschritte zur Herstellung der Zündvorrichtung gezeigt.

Figur 6 zeigt das Vorhandensein von Stanzteilen 16 und 17, die an ihren Enden Anschlußfahnen 18 und 19 für die Anschlußleitungen 4 und 5 sowie Anschlußfahnen 20 und 21 für die Kontaktfahnen 7 und 8 des Zündelementes 2 aufweisen. Beispielsweise an diesen Anschlußfahnen 18 bis 21 oder einigen davon können die Stanzteile 16 und 17 lagefixiert werden, um in einem Kunststoffspritzgußverfahren oder einem anderen geeigneten Verfahren ein umspritztes Gehäuse 22 herzustellen, welches die Stanzteile 16 und 17 zumindest teilweise umgibt und nach oben offen ist.

Figur 7 zeigt den nächsten Verfahrensschritt, bei dem die in Figur 6 gezeigte hergestellte Baueinheit mit elektronischen Bauteilen 23 versehen wird, die dem umspritzten Gehäuse 22 automatisiert zugeführt werden können. Nach der Zufuhr der elektronischen Bauteile werden diese in schaltungstechnisch sinnvoller Weise (beispielsweise durch Parallelschaltung) mit den Stanzteilen 16 und 17 kontaktiert.

Figur 8 zeigt den darauf folgenden Verfahrensschritt, bei dem die Anschlußfahnen 18 und 19 der Stanzteile 16 und 17 mit den Litzenenden der Anschlußleitungen 4 und 5 kontaktiert werden. Ebenso erfolgt eine Kontaktierung der Anschlußfahnen 7 und 8 des Zündelementes 2 mit den Anschlußfahnen 20 und 21. Nachdem dies erfolgt ist, kann, bevor das umspritzte Gehäuse 22 verschlossen wird, eine elektrische Funktionsprüfung stattfinden. Erfolgt eine solche Funktionsprüfung nicht oder ist diese positiv abgeschlossen, kann das umspritzte Gehäuse 22 verschlossen werden oder ohne Verschluß dem nächsten Verarbeitungsschritt automatisiert zugeführt werden. Bei diesem Verarbeitungsschritt wird die in Figur 8 gezeigte Anordnung von dem Zündgehäuse 3 (Figur 1) umspritzt oder in ein entsprechend ausgestaltetes Zündgehäuse 3 eingesetzt. Auch damit entsteht eine Zündvorrichtung, wie sie in Figur 1 gezeigt ist.

Diese Zündvorrichtung hat neben den schon geschilderten Vorteil den weiteren Vorteil, daß es mit Hilfe der beiden als Elektroden 6 aus dem Zündgehäuse 3 herausgeführten Stanzteile 11 und 12 unabhängig von der Länge der Anschlußleitungen 4 und 5 und der Ausführung des Zündelementes 2 sowie der integrierten Bauteile möglich ist, die Zündvorrichtung 1 auf ihre elektrische Funktionstüchtigkeit hin zu überprüfen. Denn es hat sich gezeigt, daß das Sicherheitssystem (also das Gehäuse mit der integrierten Zündvorrichtung) und die Steuervorrichtung, von der aus in Abhängigkeit von bestimmten Bedingungen der Auslöseimpuls erzeugt wird, räumlich voneinander getrennt sind. Es wäre zwar nach wie vor möglich, die Funktionsfähigkeit der Zündvorrichtung über die Anschlußleitungen 4 und 5 zu überprüfen. Dies behindert jedoch eine automatisierte Prüfung, da die Enden der Anschlußleitungen 4 und 5 manuell mit einer Prüfeinheit kontaktiert werden müssen. Aufgrund der erfindungsgemäßen Anordnung der Elektroden 6 in dem Zündgehäuse 3 kann diese Einheit in eine entsprechende Aufnahme der Prüfeinheit eingebracht oder automatisiert die beiden Elektroden 6 abgegriffen werden, um die Prüfung durchzuführen.

Alternativ zu der Verwendung von einzelnen Anschlußleitungen 4 und 5 können auch Mantelleitungen, Flachbandleitungen oder Folienleiter eingesetzt werden. Denkbar ist auch, daß anstelle von Anschlußleitungen Anschlußstifte verwendet werden, die Teile eines Steckers oder einer Buchse sind. In diesem Falle könnte daran gedacht werden, daß das Zündgehäuse 3 mit den Anschlußstiften den Stecker oder die Buchse bildet.

## Patentansprüche

1. Zündvorrichtung (1) für ein Sicherheitssystem, insbesondere einen Airbag oder einen Gurtstraffer eines Fahrzeuges, mit einem über Anschlußmittel, insbesondere Anschlußleitungen (4, 5) zündbarem Zündelement (2), wobei das Zündelement (2) mit den Anschlußmitteln in einem Zündgehäuse (3) angeordnet und vormontiert ist, wobei das Zündelement (2) Kontaktfahnen (7, 8) aufweist, wobei zumindest eine der Kontaktfahnen (7) des Zündelementes (2) über elektrisch leitende Verbindungsmittel, mit einem der Anschlußmittel, insbesondere einem Ende der Anschlußleitung (4, 5), verbunden ist, **dadurch gekennzeichnet, daß** die elektrisch leitenden Verbindungsmittel als Stanzteile (10, 11, 16, 17) ausgebildet sind.

2. Zündvorrichtung (1) nach Anspruch 1, **dadurch gekennzeichnet, daß** zumindest das Stanzteil (11, 16) als Elektrode (6) ausgebildet ist.

3. Zündvorrichtung (1) nach einem der vorhergehenden Ansprüche, **dadurch gekennzeichnet, daß** zumindest das Zündelement (2), die Verbindungsmittel sowie die Enden der Anschlußmittel in einem offenen Gehäuse, insbesondere einer Halbschale (9), angeordnet sind.

4. Zündvorrichtung (1) nach einem der vorhergehenden Ansprüche, **dadurch gekennzeichnet, daß** zumindest die Verbindungsmittel, insbesondere die Stanzteile (16, 17), von einem umspritzten Gehäuse (22) angeordnet sind.

5. Zündvorrichtung (1) nach Anspruch 4, **dadurch gekennzeichnet, daß** das offene Gehäuse oder das umspritzte Gehäuse (22) mit einer Vergußmasse (15) verschließbar ist.

6. Zündvorrichtung (1) nach Anspruch 4, **dadurch gekennzeichnet, daß** das offene Gehäuse oder das umspritzte Gehäuse (22) mit einem Deckel verschließbar ist und insbesondere mit der Vergußmasse (15) ausgegossen wird.

7. Zündvorrichtung (1) nach einem der vorhergehenden Ansprüche, **dadurch gekennzeichnet, daß** das verschlossene Gehäuse von dem Zündgehäuse (3) umgebbar ist, insbesondere umspritzt wird.

8. Zündvorrichtung (1) nach einem der vorhergehenden Ansprüche, **dadurch gekennzeichnet, daß** die Stanzteile (11, 12) als Elektroden (6) aus dem Zündgehäuse (3) herausgeführt sind und gegebenenfalls kürzbar sind.

9. Zündvorrichtung (1) nach einem der vorhergehenden Ansprüche, **dadurch gekennzeichnet, daß** in dem offenen Gehäuse oder in dem umspritzten Gehäuse (22) elektronische Bauteile (14, 22, 23) angeordnet und mit jeweils einem Stanzteil (10, 11, 16, 17) kontaktiert sind.

## Claims

1. Initiation apparatus (1) for a safety system, in particular an airbag or a belt tightener in a vehicle, having an initiation element (2) which can be initiated by connecting means, in particular connecting lines (4, 5), with the initiation element (2) being arranged and installed in advance with the connecting means in an initiation housing (3), with the initiation element (2) having contact lugs (7, 8), with at least one of the contact lugs (7) of the initiation element (2) being connected via electrical connection means to one of the connecting means, in particular to one end of the connecting line (4, 5), **characterized in that** the electrically conductive connection means are in the form of stamped parts (10, 11, 16, 17).

2. Initiation apparatus (1) according to Claim 1, **characterized in that** at least the stamped part (11, 16) is in the form of an electrode (6).

3. Initiation apparatus (1) according to one of the preceding claims, **characterized in that** at least the initiation element (2), the connection means and the ends of the connecting means are arranged in an open housing, in particular in a half-shell (9).

4. Initiation apparatus (1) according to one of the preceding claims, **characterized in that** at least the connection means, in particular the stamped parts (16, 17), are arranged in an extrusion-coated housing (22).

5. Initiation apparatus (1) according to Claim 4, **characterized in that** the open housing or the extrusion-coated housing (22) can be closed by an encapsulation compound (15).

6. Initiation apparatus (1) according to Claim 4, **characterized in that** the open housing or the extrusion-coated housing (22) can be closed by a cover, and in particular is encapsulated with the encapsulation compound (15).

7. Initiation apparatus (1) according to one of the preceding claims, **characterized in that** the closed housing can be surrounded by the initiation housing (3), in particular being extrusion-coated.

8. Initiation apparatus (1) according to one of the preceding claims, **characterized in that** the stamped parts (11, 12) are passed out of the initiation housing (3) as electrodes (6) and, if required, can be shortened.

9. Initiation apparatus (1) according to one of the preceding claims, **characterized in that** electronic components (14, 22, 23) are arranged in the open housing or in the extrusion-coated housing (22) and each make contact with a stamped part (10, 11, 16, 17).

## Revendications

1. Dispositif d'allumage (1) d'un système de sécurité, en particulier d'un airbag ou d'un tendeur de ceinture d'un véhicule, avec un élément d'allumage (2) pouvant être allumé via des moyens de raccordement, notamment des lignes de raccordement (4, 5), sachant que l'élément d'allumage (2) est disposé et pré-assemblé avec les moyens de raccordement dans un boîtier d'allumage (3), sachant que l'élément d'allumage (2) présente des talons de contact (7, 8), et sachant qu'au moins un des talons de contact (7) de l'élément d'allumage (2) est relié via des moyens de liaison électroconducteurs à un des moyens de raccordement, en particulier à une extrémité de la ligne de raccordement (4, 5), **caractérisé en ce que** les moyens de liaison électroconducteurs sont réalisés sous la forme de pièces découpées (10, 11, 16, 17).

2. Dispositif d'allumage (1) selon la revendication 1, **caractérisé en ce qu'**au moins la pièce découpée (11, 16) est réalisée sous forme d'électrode (6) .

3. Dispositif d'allumage (1) selon une quelconque des revendications précédentes, **caractérisé en ce qu'**au moins l'élément d'allumage (2), les moyens de liaison ainsi que les extrémités des moyens de raccordement sont disposés dans un boîtier ouvert, en particulier dans une demi-coque (9).

4. Dispositif d'allumage (1) selon une quelconque des revendications précédentes, **caractérisé en ce qu'**au moins les moyens de liaison, en particulier les pièces découpées (16, 17), sont disposés dans un boîtier surmoulé (22).

5. Dispositif d'allumage (1) selon la revendication 4, **caractérisé en ce que** le boîtier ouvert ou le boîtier surmoulé (22) peut être fermé par une masse de remplissage (15).

6. Dispositif d'allumage (1) selon la revendication 4, **caractérisé en ce que** le boîtier ouvert ou le boîtier surmoulé (22) peut être fermé par un couvercle et est notamment rempli de la masse de remplissage (15).

7. Dispositif d'allumage (1) selon une quelconque des revendications précédentes, **caractérisé en ce que** le boîtier d'allumage (3) peut entourer le boîtier fermé, en particulier est surmoulé autour de ce dernier.

8. Dispositif d'allumage (1) selon une quelconque des revendications précédentes, **caractérisé en ce que** les pièces découpées (11, 12) sont dirigées hors du boîtier d'allumage (3) sous la forme d'électrodes (6) et peuvent le cas échéant être raccourcies.

9. Dispositif d'allumage (1) selon une quelconque des revendications précédentes, **caractérisé en ce que** des composants électroniques (14, 22, 23) sont disposés dans le boîtier ouvert ou dans le boîtier surmoulé (22) et sont mis en contact avec une pièce découpée respective (10, 11, 16, 17).
